# EUROPEAN PATENT APPLICATION

(11) **EP 4 343 032 A2**
(43) Date of publication of application: **27.03.2024**
(21) Application number: 23194914.0
(22) Date of filing: 01.09.2023
(51) Int. Cl.: C25B 1/04, C25B 9/23, C25B 9/77, C25B 11/032, C25B 11/053, C25B 11/093

(54) **LAMINATED CATALYST, ELECTRODE, MEMBRANE ELECTRODE ASSEMBLY, ELECTROCHEMICAL CELL, STACK, AND ELECTROLYZER**

(30) Priority: 20.09.2022 JP 2022149609
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: YOSHINAGA, Norihiro, Tokyo (JP); SUGANO, Yoshitsune, Tokyo (JP); FUKAZAWA, Taishi, Tokyo (JP); HOSONO, Yasuharu, Tokyo (JP)
(74) Representative: Marks & Clerk LLP

(57) **Abstract**

A laminated catalyst according to an embodiment includes an oxide layer, a first catalyst layer on the oxide layer and a second catalyst layer on the first catalyst layer. The oxide layer is a layer of oxide including one or more non-noble metals as a main component. The first catalyst layer includes an oxide of noble metal including Ir and/or Ru as a main component. The second catalyst layer includes an oxide of noble metal including Ir and/or Ru as a main component. The first catalyst layer is denser than the second catalyst layer.

## Description

### FIELD

The present embodiments relate to a laminated catalyst, an electrode, a membrane electrode assembly, an electrochemical cell, a stack, and an electrolyzer.

### BACKGROUND

In recent years, electrochemical cells have been actively studied. Among electrochemical cells, for example, a polymer electrolyte electrolysis cell (PEMEC) is expected to be used for hydrogen generation in a large-scale energy storage system. In order to ensure sufficient durability and electrolytic properties, platinum (Pt) nanoparticle catalysts are generally used for PEMEC cathodes, and noble metal catalysts such as iridium (Ir) nanoparticle catalysts are used for positive electrodes.

### BRIEF DESCRIPTION OF THE DRAWINGS

FIG. 1 is a cross-sectional schematic diagram of an electrode according to an embodiment.
FIG. 2 is a schematic diagram showing analyzing positions.
FIG. 3 is a schematic diagram of a membrane electrode assembly (MEA) according to an embodiment.
FIG. 4 is a schematic diagram of an electrochemical cell according to an embodiment.
FIG. 5 is a schematic diagram of a stack according to an embodiment.
FIG. 6 is a conceptual diagram of an electrolyzer according to an embodiment.

### DETAILED DESCRIPTION

A laminated catalyst according to an embodiment includes an oxide layer, a first catalyst layer on the oxide layer and a second catalyst layer on the first catalyst layer. The oxide layer is a layer of oxide including one or more non-noble metals as a main component. The first catalyst layer includes an oxide of noble metal including Ir and Ru as a main component. The second catalyst layer includes an oxide of noble metal including Ir and/or Ru as a main component. The first catalyst layer is denser than the second catalyst layer.

Hereinafter, the embodiments will be described with reference to the drawings.

It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

### (FIRST EMBODIMENT)

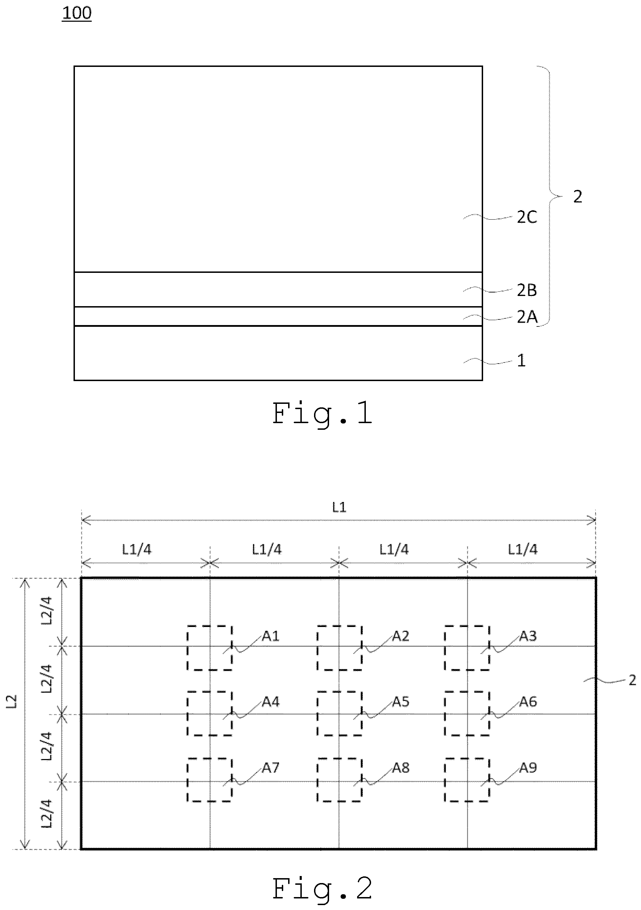

The first embodiment relates to an electrode and a laminated catalyst. FIG. 1 is a schematic cross-sectional diagram of an electrode 100 according to the first embodiment of the present invention. The electrode 100 includes a support 1 and a laminated catalyst 2. The laminated catalyst 2 can be used as a catalyst in electrode reactions for water electrolysis in the embodiments. The laminated catalysts 2 are also used as a catalyst for synthesizing ammonia.

The electrode 100 according to the first embodiment is used as an anode for water electrolysis. When the laminated catalyst 2 further includes a catalyst for a fuel cell, the electrode 100 can be also used as an oxygen electrode of a fuel cell. The electrode 100 according to embodiments can be used as an anode for producing ammonia by electrolysis. The electrode 100 according to embodiments can be used as an anode of an electrolyzer for synthesizing ammonia. Hereinafter, an example of water electrolysis is described in the first embodiment and the other embodiments. The electrode 100 according to embodiments can be also used for other than water electrolysis, for example, as an anode of a membrane electrode assembly for electrolysis of synthesizing ammonia so that ultrapure water is supplied to an anode, proton and oxygen is produced in the anode by decomposing water, the produced proton passes through an electrolyte membrane, and ammonia is synthesized by binging nitrogen provided to a cathode, protons, and electrons. The electrode 100 according to embodiments can be also used as a cathode for producing hydrogen by electrolyzing ammonia. The electrode 100 according to embodiments can be used as a cathode for a hydrogen generation apparatus. Hereinafter, an example of water electrolysis is described in the first embodiment and the other embodiments. The electrode 100 according to embodiments can be also used for other than water electrolysis, for example, as a cathode of a membrane electrode assembly for electrolysis of decomposing ammonia so that ammonia is supplied to a cathode, proton and nitrogen is produced in the cathode by decomposing ammonia, the produced proton passes through an electrolyte membrane, and hydrogen is synthesized by binging protons and electrons.

A material having porous and high electric conductivity is preferably used for the support 1. The support 1 is, for example, a porous member in which gas and liquid passes. The support 1 is preferably a porous support of bulb metal because the electrode 100 is uses as an anode of a water electrolysis cell. It is preferable that the porous support of bulb metal is a porous support containing one or more metals selected from the group consisting of titanium (Ti), aluminum (Al), tantalum (Ta), niobium (Nb), hafnium (Hf), zirconium (Zr), zinc (Zn), tungsten (W), bismuth (Bi), and antimony (Sb) or a porous support consisting of one kind of metals selected from consisting of titanium (Ti), aluminum (Al), tantalum (Ta), niobium (Nb), hafnium (Hf), zirconium (Zr), zinc (Zn), tungsten (W), bismuth (Bi), and antimony (Sb).

It is preferable that the bulb metal of the support 1 is Ti which has high durability. For example, a Ti mesh, a Ti cloth, or a sintered body of Ti is preferable for the support 1. When movability of materials is considered, a porosity rate of the support 1 is preferably 20 [%] or more and 95[%] or less and more preferably 40 [%] or more and 90 [%] or less. When, for example, a metal woven cloth with intertwined metal fibers is used as the support 1, a diameter of fibers of the support 1 is preferably 1 [um] or more and 500 [µm] or less. In view of reactivity and supplying electricity, the diameter of the fibers of the support 1 is more preferably 1 [um] or more and 100 [µm] or less. When the support 1 is sintered particles, particle diameters of the sintered particles are preferably 1 [um] or more and 500 [µm] or less. In view of reactivity and supplying electricity, the particle diameters of the sintered particles are preferably 1 [um] or more and 500 [µm] or less.

A coating layer may be provided on the support 1. When a coating layer having electric conductivity is finely provided, the durability of the electrode 100 can be improved. The coating layer is not particularly limited to a material including one or more metals, a material including one or more oxides, a material including one or more nitrides, ceramics, or carbon. The durability of the electrode 100 can be more improved when the coating layer has a multi-layered structure with layers having different composition or a structure having graded composition.

The laminated structure 2 includes an oxide layer 2A, a first catalyst layer 2B, and a second catalyst layer 2C. The oxide layer 2A, the first catalyst layer 2B, and the second catalyst layer 2C of the laminated catalyst 2 are stacked in this order. The support 1 is in contact with the laminated catalyst 2 and is preferably in direct contact with the laminated catalyst 2.

The oxide layer 2A includes an oxide of one or more non-noble metals as a main component. The oxide layer 2A is a layer of oxide including one or more non-noble metals as a main component. The oxide layer 2A is provided between the support 1 and the first catalyst layer 2B. By virtue of providing the oxide layer 2A between the support 1 and the first catalyst layer 2B, the durability of the laminated catalyst 2 is improved.

A porosity rate of the oxide layer 2A is preferably 0 [%] or more and 5 [%] or less and more preferably 0 [%] or more and 3 [%] or less. The porosity rate of the oxide layer 2A is preferably half or less of a porosity rate of the first catalyst layer 2B. The porosity rate of the oxide layer 2A is preferably half or less of the second catalyst layer 2C. A porosity explained in embodiments including the porosity rate of the oxide layer 2A is evaluated by observing the cross-sectional image, for example HAADF-STEM (High Angle Annular Dark-Field Scanning Transmission Electron Microscopy) image, TEM (Transmission Electron Microscopy) image, SEM (Scanning Electron Microscopy) image, or analyzed images of them whose cross-sectional direction is similar to the schematic diagram of FIG. 1 or the like. A cross-sectional direction for evaluating the porosity is, for example, parallel to the longitudinal direction of the oxide layer 2A. The porosity is evaluated by observing the spots A1 to A9 shown in the schematic diagram showing analyzing positions of FIG. 2. When a length of a longer side direction of the laminated catalyst 2 is expressed by L1 and a length of the short side direction of the laminated catalyst 2 is expressed by L2, the laminated catalyst 2 can be divided to 16 regions by lines dividing the length L1 into four equal lengths in the longer side direction and lines dividing the length L2 into four equal lengths in the short side direction. The spots A1 to A9 are placed in regions whose center are at the nine intersections of the boundary lines of the 16 regions. The cross-sectional observing area is equal to a thickness to be observed in length and three times of the thickness to be observed in width. The porosity rate is regarded as an average of values excluding the maximum and the minimum of nine porosity values obtained by observing the nine spots A1 to A9. A porosity rate of a layer other than the oxide layer 2A is also determined in the like manner of the oxide layer 2A.

The oxide layer 2A preferably includes an oxide including one or more transition elements. The oxide layer 2A preferably includes an oxide including one or more elements selected from the group consisting of Ni, Co, Fe, Mn, and Cr. It is preferably that the oxide layer 2A includes an oxide of Ni and optionally includes an oxide including Ni and one or more metals selected from the group consisting of Co, Fe, Mn, and Cr. The oxide layer 2A preferably includes an oxide including Ni. It is preferable that the oxide layer 2A includes an oxide including Ni as a main component (50 wt% or more of the oxide layer 2A is an oxide including Ni). The oxide layer 2A preferably includes particles of an oxide of Ni. The oxide layer 2A preferably includes particles of an oxide including Ni. The oxide particles included in the oxide layer 2A is not supported on a supporting member (carrier particles). The particles of the oxide including Ni or/and the particles of the oxide of Ni are not supported on a supporting member (carrier particles). The particles of the oxide including Ni is preferably consisting of Ni and O (oxygen).

The oxide layer 2A preferably has a structure of aggregated oxide particles including one or more transition elements. It is preferable that 70 [vol%] or more and 100 [vol%] of the oxide layer 2A is the structure of aggregated oxide particles including a transition element. It is more preferable that 90 [vol%] or more and 100 [vol%] of the oxide layer 2A is the structure of aggregated oxide particles including one or more transition elements.

It is preferable that 70 [vol%] or more and 100 [vol%] of the oxide layer 2A is the structure of aggregated oxide particles including one or more transition elements. It is more preferable that 90 [vol%] or more and 100 [vol%] of the oxide layer 2A is the structure of aggregated oxide particles including one or more transition elements.

The oxide layer 2A preferably has a structure of aggregated oxide particles including one or more elements selected from the group consisting of Ni, Co, Fe, Mn, and Cr. It is preferable that 70 [vol%] or more and 100 [vol%] of the oxide layer 2A is the structure of aggregated oxide particles including one or more elements selected from the group consisting of Ni, Co, Fe, Mn, and Cr. It is more preferable that 90 [vol%] or more and 100 [vol%] of the oxide layer 2A is the structure of aggregated oxide particles including one or more elements selected from the group consisting of Ni, Co, Fe, Mn, and Cr.

It is preferable that the oxide layer 2A has a structure of aggregated oxide particles including Ni and optionally including one or more elements selected from the group consisting of Co, Fe, Mn, an Cr. It is preferable that 70 [vol%] or more and 100 [vol%] of the oxide layer 2A is the structure of aggregated oxide particles including Ni and optionally including one or more elements selected from the group consisting of Co, Fe, Mn, an Cr. It is more preferable that 90 [vol%] or more and 100 [vol%] of the oxide layer 2A is the structure of aggregated oxide particles including Ni and optionally including one or more elements selected from the group consisting of Co, Fe, Mn, an Cr.

The oxide layer 2A preferably has a structure of aggregated oxide particles including Ni. It is preferable that 70 [vol%] or more and 100 [vol%] of the oxide layer 2A is the structure of aggregated oxide particles including Ni. It is preferable that 90 [vol%] or more and 100 [vol%] of the oxide layer 2A is the structure of aggregated oxide particles including Ni.

A total ratio of one or more transition elements contained in the oxide layer 2A to one or more metal elements contained in the oxide layer 2A is preferably 80 [atom%[ or more and 100 [atom%] or less, more preferably 95 [atom%] or more and 100 [atom%] or less, and still more preferably 99 [atom%] or more and 100 [atom%] or less.

A total ratio of Ni, Co, Fe, Mn, and Cr contained in the oxide layer 2A to one or more metal elements contained in the oxide layer 2A is preferably 80 [atom%] or more and 100 [atom%] or less, more preferably 95 [atom%] or more and 100 [atom%] or less, and still more preferably 99 [atom%] or more and 100 [atom%] or less.

A ratio of Ni contained in the oxide layer 2A to one or more metal elements contained in the oxide layer 2A is preferably 80 [atom%] or more and 100 [atom%] or less, more preferably 95 [atom%] or more and 100 [atom%] or less, and still more preferably 99 [atom%] or more and 100 [atom%] or less.

The oxide layer 2A preferably includes NiO. The oxide layer 2A may include Ni and one or more metals selected from Co, Fe, Pt, Pd, Rh, Mn, Cr, Ru, and Ir. A total ratio of Co, Fe, Pt, Pd, Rh, Mn, Cr, Ru, and Ir contained in the oxide layer 2A to metal elements contained in the oxide layer 2A is preferably 0 [atom%] or more and 20 [atom%] or less, more preferably 0 [atom%] or more and 5 [atom%] or less, and still more preferably 0 [atom%] or more and 1 [atom%] or less.

A thickness of the oxide layer 2A is 0.1 [nm] or more and 1.5 [nm] or less. If the oxide layer 2A is too thin, the effect of improving durability is small. If the oxide layer 2A is too thick, the oxide layer 2A is easily cleaved from the support 1. For the above reasons, the thickness of the oxide layer 2A is preferably 0.1 [nm] or more and 1.3 [nm] or less, more preferably 0.1 [nm] or more and 1.0 [nm) or less, and more preferably 0.1 [nm] or more and 0.5 [nm] or less. If the oxide layer 2A is too thick, gas-permeability becomes decreased. In view of gas-permeability and the others, the oxide layer 2A which satisfies above range of thickness is preferable.

An average circumscribed circle diameter of the oxide particles including Ni included in the oxide layer 2A is preferably 0.1 [nm] or more and 1.5 [nm] or less, more preferably 0.1 [nm] or more and 1.3 [nm] or less, more preferably 0.1 [nm] or more and 1.0 [nm] or less, and still more preferably 0.1 [nm] or more and 0.5 [nm] or less.

A surface of the oxide layer 2A that faces the support 1 is preferably in contact with a surface of the support 1 that faces the oxide layer 2A. A surface of the oxide layer 2A that faces the support 1 is preferably in direct contact with a surface of the support 1 that faces the oxide layer 2A. An entire surface of the oxide layer 2A that faces the support 1 is preferably in contact with an entire surface of the support 1 that faces the oxide layer 2A. An entire surface of the oxide layer 2A that faces the support 1 is preferably in direct contact with an entire surface of the support 1 that faces the oxide layer 2A.

The existence of the oxide layer 2A is evaluated by an image of HAADF-STEM and line-analysis of EELS (Electron Energy Loss Spectroscopy). The HAADF-STEM image is observed, and the line-analysis is performed at the oxide layer 2A by EELS. When the oxide layer 2A includes Ni as a main component and the first catalyst layer 2B includes Ir or/and Ru as a main component, position where a composition ratio of Ni exceeds a total composition of Ir or/and Ru is regarded as an interface between the oxide layer 2A and the first catalyst layer 2B. It is confirmed that the Ni element is in an oxide state by performing chemical bond state analysis of Ni by EELS. The oxide layer 2A is confirmed by selecting appropriate elements as reference elements for determining the position of the interface between the oxide layer 2A and the first catalyst layer 2B depending on the contained elements in the oxide layer 2A and the first catalyst layer 2B.When the oxide layer 2A includes other than the oxide of Ni, the confirmation process of the oxide layer 2A and the composition-analysis of the oxide layer 2A can be performed by EELS.

The first catalyst layer 2B includes an oxide of noble metal including Ir and/or Ru as a main component (50 wt% or more of the first catalyst layer 2B is an oxide including Ir and/or Ru). The first catalyst layer 2B is provided between the oxide layer 2A and the second catalyst layer 2C.

A surface of the first catalyst layer 2B facing to the oxide layer 2A is preferably in direct contact with the oxide layer 2A. A surface of the first catalyst layer 2B facing to the second catalyst layer 2C is preferably in direct contact with the second catalyst layer 2C. An entire surface of the first catalyst layer 2B facing to the oxide layer 2A is preferably in direct contact with an entire surface of the oxide layer 2A facing to the first catalyst layer 2B. An entire surface of the first catalyst layer 2B facing to the second catalyst layer 2C is preferably in direct contact with an entire surface of the second catalyst layer 2C facing to the first catalyst layer 2B.

The first catalyst layer 2B is a dense layer. A porosity rate of the first catalyst layer 2B is preferably 0 [%] or more and 5 [%] or less and more preferably 0 [%] or more and 3 [%] or less.

The oxide layer 2A and the first catalyst layer 2B are dense layers. A difference between the porosity rate of the oxide layer 2A and the porosity rate of the first catalyst layer 2B (| [the porosity rate of the oxide layer 2A] - [the porosity rate of the first catalyst layer 2B] |) is preferably 0 [%] or more 5 [%] or less and more preferably 0 [%] or more and 3 [%] or less.

The first catalyst layer 2B reduces contact between the support 1 and an electrolyte solution and degradation of the support 1. When the first catalyst layer 2B is not provided in the electrode 100, an interface resistance is easily increased because the support 1 is degraded due to oxidation, etc. in a water electrolysis operation. If the interface resistance is increased due to the degradation of the support 1, cell voltage may be increased. By virtue of the existence of the oxide layer 2A and the first catalyst layer 2B between the support 1 and the second catalyst layer 2C, immersing the electrolyte into the support 1 is decreased, and the durability of the electrode 100 is improved.

By virtue of the existence of the oxide layer 2A between the support 1 and the first catalyst layer 2B, a stability of the first catalyst layer 2B is improved, and the degradation of the support 1 is decreased. By virtue of the high density of first catalyst layer 2B, immersion of a solution used for removing pore forming member (non-noble metal) into the oxide layer 2A is decreased. Therefore, the durability of the electrode 100 is improved with using both the oxide layer 2A and the first catalyst layer 2B which does not work primarily as a catalyst. The improving of the durability is not sufficient under the evaluation standard of embodiment with using only one of the oxide layer 2A and the first catalyst layer 2B.

A thickness of the first catalyst layer 2B is preferably 0.5 [nm] or more and 15 [nm] or less. If the first catalyst layer 2B is too thin, the effect of reducing degradation of support 1 is not great. If the first catalyst layer 2B is too thick, expansion and contraction of the laminated catalyst 2 may occur, and cleavage in the laminated catalysts 2 or at interface between the support 1 and the oxide layer 2A seems to be easily occurred. If the cleavage in the laminated catalysts 2 at interface between the support 1 and the oxide layer 2A is occurred, the resistance increases, and the electrolysis voltage increases. The thickness of the first catalyst layer 2B is more preferably 1 [nm] or more and 10 [nm] or less and still more preferably 1 [nm] or more and 7 [nm] or less.

The first catalyst layer 2B preferably includes one or more compound selected from the group consisting of Ir oxide (an oxide including Ir as a main component or/and an oxide consisting of Ir and O), Ru oxide (an oxide including Ru as a main component or/and an oxide consisting of Ru and O), and a complex oxide of Ir and Ru (an oxide including Ir and Ru as a main component or/and an oxide consisting of Ir, Ru, and O). The one or more compounds selected from the group consisting of the Ir oxide, the Ru oxide, and the complex oxide of Ir and Ru is preferably catalyst particle of the first catalyst layer 2B. The first catalyst layer 2B preferably includes the Ir oxide or/and the complex oxide of Ir and Ru, and optionally includes the Ru oxide. The first catalyst layer 2B preferably includes the Ir oxide, and optionally includes the Ru oxide or/and the complex oxide of Ir and Ru. The sum of the concentration of Ir and Ru contained in the first catalyst layer 2B to one or more metal elements contained in the first catalyst layer 2B is preferably 90 [wt%] or more and 100 [%] or less.

The first catalyst layer 2B has an aggregated structure of one or more kinds of particles of the Ir oxide, particles of the Ru oxide, and particles of the complex oxide of Ir and Ru. It is preferable that 70 [vol%] or more and 100 [vol%] of the first catalyst layer 2B is the aggregated structure of one or more kinds of particles of the Ir oxide, particles of the Ru oxide, and particles of the complex oxide of Ir and Ru. It is preferable that 90 [vol%] or more and 100 [vol%] of the first catalyst layer 2B is the aggregated structure of one or more kinds of particles of the Ir oxide, particles of the Ru oxide, and particles of the complex oxide of Ir and Ru.

The particles of the Ir oxide of the first catalyst layer 2B are not supported on a support-member (carrier particles). The particles of the Ir oxide of the first catalyst layer 2B preferably consist of Ir and O.

The particles of the Ru oxide of the first catalyst layer 2B are not supported on a support-member (carrier particles). The particles of the Ru oxide of the first catalyst layer 2B preferably consist of Ru and O.

The particles of the complex oxide of Ir and Ru of the first catalyst layer 2B are not supported on a support-member (carrier particles) . The particles of the complex oxide of Ir and Ru of the first catalyst layer 2B preferably consist of a complex oxide of Ir, Ru, and O.

When the first catalyst layer 2B includes catalyst particles including one or more kinds of metals other than Ir and Ru, it is preferable that the catalyst particles of one or more kinds of metals other than Ir and Ru are also not supported on a support-member. The catalyst particles of one or more kinds of metals other than Ir and Ru are, for example, particles of Pt.

It is preferable that 70 [vol%] or more and 100 [vol%] of the first catalyst layer 2B is the aggregated structure of particles which are not supported on a support-member. It is more preferable that 90 [vol%] or more and 100 [vol%] of the first catalyst layer 2B is the aggregated structure of particles which are not supported on a support-member. It is still more preferable that 100 [vol%] of the first catalyst layer 2B is the aggregated structure of particles which are not supported on a support-member.

An average circumscribed circle diameter of the oxide particles including in the first catalyst layer 2B is preferably 0.5 [nm] or more and 15 [nm] or less, more preferably 1 [nm] or more and 10 [nm] or less, and still more preferably 1 [nm] or more and 7 [nm] or less.

The first catalyst layer 2B preferably does not include a gap layer such as the gap layer of the second catalyst layer 2C because the first catalyst layer 2B is a dense layer.

The existence of the first catalyst layer 2B is evaluated by an image of HAADF-STEM and line-analysis of EELS (Electron Energy Loss Spectroscopy). The HAADF-STEM image is observed, and the line-analysis is performed at the first catalyst layer 2B by EELS. When the oxide layer 2A includes Ni as a main component and the first catalyst layer 2B includes Ir or/and Ru as a main component, position where a total composition of Ir or/and Ru exceeds a composition ratio of Ni is regarded as an interface between the oxide layer 2A and the first catalyst layer 2B. It is confirmed that the Ir element and Ru element are in an oxide state by performing chemical bond state analysis of Ir and Ru by EELS. The first catalyst layer 2B is confirmed by selecting appropriate elements as reference elements for determining the position of the interface between the oxide layer 2A and the first catalyst layer 2B depending on the contained elements in the oxide layer 2A and the first catalyst layer 2B. It is preferable that an interface between the first catalyst layer 2B and the second catalyst layer 2C is distinguished from a difference between the porosity rate of the first catalyst layer 2B and a porosity rate of the second catalyst layer 2C or a difference of the layer structure. When the first catalyst layer 2B includes other than the Ir oxide, the Ru oxide, and the complex oxide of Ir and Ru, the confirmation process of the first catalyst layer 2B and the composition-analysis of the first catalyst layer 2B can be performed by EELS. A method for confirming the second catalyst layer 2C and a method for analyzing composition of the second catalyst layer 2C are similar to the method for confirming the first catalyst layer 2B and the method for analyzing composition of the first catalyst layer 2B.

The second catalyst layer 2C includes an oxide which includes Ir and/or Ru as a main component (50 wt% or more of the second catalyst layer 2C is an oxide including Ir and/or Ru). The first catalyst layer 2B is placed between the second catalyst layer 2C and the oxide layer 2A. The other catalyst layer or the like may be provided on a side of the second catalyst layer 2C opposite to the first catalyst layer 2B.

The second catalyst layer 2C is a high-porous layer. The first catalyst layer 2B has a porosity rate which is lower than a porosity rate of the second catalyst layer 2C and is a dense layer. The first catalyst layer 2B is denser than the second catalyst layer 2C. A porosity rate of the second catalyst layer 2C is preferably 10 [%] or more and 90 [%] or less and more preferably 30 [%] or more and 70 [%] or less.

The second catalyst layer 2C is a main layer with respect to catalytic action in the laminated catalyst 2. In view of the water electrolysis characteristics or the like, a thickness of the second catalyst layer 2C is preferably 10 times or more and 200 times or less of the sum of the thickness of the oxide layer 2A and the thickness of the first catalyst layer 2B.

In view of the water electrolysis characteristics, the thickness of the second catalyst layer 2C is preferably 100 [nm] or more. In view of the same above, the sum of the amount of Ir and Ru per area of the second catalyst layer 2C is preferably 0.02 [mg/cm²] or more and 1.0 [mg/cm²] or less and more preferably 0.05 [mg/cm²] or more and 0.5 [mg/cm²] or less. The sum of the amount of them can be analyzed by ICP-MS (Inductively Coupled Plasma Mass Spectrometry) . The amount of Ir and Ru may be slightly decreased due to its operation as a fuel cell or a water electrolysis apparatus without conspicuous degrading of characteristics. In view of supplying water and exhausting oxygen smoothly, the thickness of the second catalyst layer 2C is 200 [nm] or more and 2000 [nm] or less.

The second catalyst layer 2C preferably includes one or more compounds selected from the group consisting of the Ir oxide, the Ru oxide, and the complex oxide of Ir and Ru. The one or more compounds selected from the group consisting of the Ir oxide, the Ru oxide, and the complex oxide of Ir and Ru are preferably catalyst particles. The second catalyst layer 2C preferably includes the Ir oxide and/or the complex oxide of Ir and Ru and optionally includes the Ru oxide. The second catalyst layer 2C preferably includes the Ir oxide and optionally includes the Ru oxide and/or the complex oxide of Ir and Ru. The sum of the concentration of Ir and Ru contained in the second catalyst layer 2C to one or more metal elements contained in the first catalyst layer 2B is preferably 90 [wt%] or more and 100 [wt%] or less.

The second catalyst layer 2C has a laminated structure including sheet catalyst layers and gap layers which are stacked alternately or/and a porous structure including aggregated catalyst particles. The second catalyst layer 2C has a laminated structure including dense layers and high-porous layers which are stacked alternately or/and a porous structure including aggregated catalyst particles.

When the second catalyst layer 2C has the laminated structure, it is preferable that the dense layers with an average thickness of 4 [nm] or more and 50 [nm] or less for each layer and high-porous layers with an average thickness of 4 [nm] or more and 100 [nm] or less for each layer are stacked alternately. The average thickness of the high-porous layers is preferably thicker than the average thickness of the dense layer. The average thickness of the high-porous layers is preferably 2 times or more and 10 times or less of the average thickness of the dense layers. When the laminated structure includes six layers, the laminated structure that the dense layers and the high-porous layers are alternately and repeatedly stacked includes the dense layer, the high-porous layer, the dense layer, the high-porous layer, the dense layer, and the high-porous layer are stacked in this order. The second catalyst layer 2C having the laminated structure including the dense layers and the high-porous layers stacked alternately has an excellent characteristic of water electrolysis and high durability of catalyst degradation even if the second catalyst layer 2C includes small amounts of noble metal.

The dense layer and the high-porous layer include catalyst particles. The high-porous layer includes, for example, a pillar-shaped member or/and sheet like member. The pillar-shaped member or/and the sheet like member connects the dense layers which sandwiches the high-porous layer. The dense layer and the high-porous layer include pores. The pores of the dense layer and the high-porous layer are connected so that gas or/and liquid is able to pass through from one side of the second catalyst layer 2C on the first catalyst layer side to the opposite side of the second catalyst layer 2C.

A porous rate of the dense layer is preferably 5 [%] or more and 45 [%] or less and more preferably 10 [%] or more and 30 [%] or less.

A porous rate of the high-porous layer is preferably 50 [%] or more and 95 [%] or less and more preferably 60 [%] or more and 90 [%] or less.

A ratio R1 of the thickness of the dense layer to the thickness of the first catalyst layer 2B ([the average thickness of the dense layers] / [the average thickness of the first catalyst layer 2B]) is preferably 1 or more and 30 or less and more preferably 1.9 or more and 19 or less. When the above range of the ratio R1 is satisfied, reactions are reduced in the first catalyst layer 2B because the second catalyst layer 2C has sufficient reaction area. Additionally, damages caused by the reactions are reduced, and long-term durability is secured.

A ratio R2 of the thickness of the high-porous layer to the thickness of the first catalyst layer 2B ([the average thickness of the high-porous layers]/[the average thickness of the first catalyst layer 2B]) is preferably 0.3 or more and 10 or less and more preferably 0.4 or more and 4 or less. When the above range of the ratio R2 is satisfied, invasion of reacting compounds to a surface of the first catalyst layer 2B is reduced, and the reacting compounds are smoothly supplied to the second catalyst layer 2C entirely.

A ratio R3 of the thickness of the high-porous layer to the thickness of the dense layer ([the average thickness of the high-porous layers] /[the average thickness of the dense layers]) is preferably 1 or more and 10 or less and more preferably 1 or more and 5 or less. When the above range of the ratio R3 is satisfied, it is preferable that the thickness of the second catalyst layer 2C becomes thinner, diffusion distance of water and gas is shortened, and electric resistance is degreased.

When the second catalyst layer 2C has the porous structure, the porous structure includes the catalyst particles and pores. The second catalyst layer 2C includes pores where gas or/and liquid is able to pass through from one side of the second catalyst layer 2C to the opposite side of the second catalyst layer 2C.

When the second catalyst layer 2C has the porous structure, the second catalyst layer 2C preferably has an aggregated structure of one or more particles selected from the group consisting of particles of the Ir oxide, particles of the Ru oxide, and particles of complex oxide of Ir and Ru. It is preferable that 70 [vol%] or more and 100 [vol%] of the first catalyst layer 2B is the aggregated structure of one or more particles selected from the group consisting of particles of the Ir oxide, particles of the Ru oxide, and particles of complex oxide of Ir and Ru of the second catalyst layer 2C. It is preferable that 90 [vol%] or more and 100 [vol%] of the first catalyst layer 2B is the aggregated structure of one or more particles selected from the group consisting of particles of the Ir oxide, particles of the Ru oxide, and particles of complex oxide of Ir and Ru of the second catalyst layer 2C.

The particles of the Ir oxide of the second catalyst layer 2C are not supported on a support-member (carrier particles). The particles of the Ir oxide of the second catalyst layer 2C preferably consist of Ir and O.

The particles of the Ru oxide of the second catalyst layer 2C are not supported on a support-member (carrier particles). The particles of the Ru oxide of the second catalyst layer 2C preferably consist of Ru and O.

The particles of the complex oxide of Ir and Ru of the second catalyst layer 2C are not supported on a support-member (carrier particles) . The particles of the complex oxide of Ir and Ru of the second catalyst layer 2C preferably consist of Ir, Ru, and O.

When the second catalyst layer 2C includes catalyst particles including one or more metal elements other than Ir and Ru, it is preferable that the catalyst particles including one or more kinds of metals other than Ir and Ru are also not supported on a support-member. The catalyst particles including one or more metal elements other than Ir and Ru are, for example, particles of Pt.

When the second catalyst layer 2C has the porous structure, it is preferable that 70 [vol%] or more and 100 [vol%] of the second catalyst layer 2C is the aggregated structure of particles which are not supported on a support-member. When the second catalyst layer 2C has the porous structure, it is more preferable that 90 [vol%] or more and 100 [vol%] of the second catalyst layer 2C is the aggregated structure of particles which are not supported on a support-member. When the second catalyst layer 2C has the porous structure, it is still more preferable that 100 [vol%] of the second catalyst layer 2C is the aggregated structure of particles which are not supported on a support-member.

Hereinafter, a method for manufacturing the electrode 100 will be described. The method for manufacturing the electrode 100 includes forming the oxide layer 2A on the support 1 by sputtering, forming the first catalyst layer 2B on the oxide layer 2A by sputtering, and forming the second catalyst layer 2C on the first catalyst layer 2B by sputtering.

While the forming the oxide layer 2A on the support 1 by sputtering is processed, the oxide layer 2A is formed on the support 1 by sputtering with using, for example, Ni target. In this process, RF sputtering in an atmosphere containing oxygen gas and argon gas is preferable. In this process, a ratio of noble metal contained in a target (when two or more targets are used for the sputtering, the ratio of noble metal is calculated with considering sputtering power ratios) is preferable 0 [wt%] or more and 0.1 [wt%] or less.

While the forming the first catalyst layer on the oxide layer 2A by sputtering is processed, the first catalyst layer 2B is formed on the oxide layer 2A by sputtering with using a target with high noble metal content, for example, Ir or/and Ru as a catalytic material. In this process, DC sputtering in an atmosphere containing oxygen gas and argon gas is preferable. In this process, a ratio of noble metal contained in a target is preferable 50 [wt%] or more and 100 [wt%] or less. In this process, a ratio of non-noble metal contained in a target (when two or more targets are used for the sputtering, the ratio of non-noble metal is calculated with considering sputtering power ratios) is preferable 0 [wt%] or more and 0.1 [wt%] or less. If the ratio of non-noble metal is high, the porosity ratio of the first catalyst layer 2B of the laminated catalyst 2 may be increased.

While the forming the second catalyst layer 2C on the first catalyst layer 2B by sputtering is processed, a mixed layer of an oxide of a pore forming member and an oxide of a catalytic material is formed on the first catalyst layer 2B by sputtering with using a target of the pore forming member and a target with high noble metal content, for example, Ir or/and Ru as the catalytic material. In this process, sputtering in an atmosphere containing oxygen gas and argon gas is preferable. The member that the mixed layer is formed is treated with acid, for example, sulfuric acid to dissolve the oxide of the pore forming member to obtain the second catalyst layer 2C. As the pore forming member, Ni or/and Co is preferable, and Ni is preferable.

The first catalyst layer 2B reduces immersion of the acid, for example, sulfuric acid to the oxide layer 2B and reduces dissolution of the oxide layer 2A.

When the second catalyst layer 2C has the laminated structure, a laminated body of the oxide of the pore forming member and the oxide of the catalytic material is formed by sputtering the pore forming member and the catalytic material alternately and repeatedly, the laminated body is treated with the acid to dissolve the oxide of the pore forming member, and the electrode 100 is obtained. The catalytic material and the pore forming member may be co-sputtered during sputtering the pore forming member. During sputtering the catalytic material, the composition of Ir an Ru of the second catalyst layer 2C can be changed in a thickness direction of the second catalyst layer 2C by, for example, changing a sputtering ratio of Ir and Ru.

When the second catalyst layer 2C has the porous structure, the pore forming member and the catalytic material are co-sputtered, the oxide of the pore forming member is dissolved by the acid, and the electrode 100 is obtained.

For forming the laminated catalyst 2 including the oxide layer 2A and the first catalyst layer 2B, sputtering method in the like manner of the second catalyst layer can be applied to the oxide layer 2A and the first catalyst layer 2B. By virtue of applying the sputtering method according to embodiments, three different layers can be formed efficiently. Accordingly, the electrode 100 manufactured by the method of the embodiment contributes to improve the durability of the water electrolyzer.

### (SECOND EMBODIMENT)

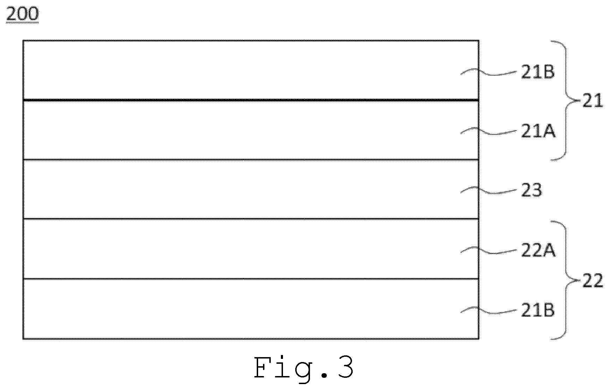

A second embodiment relates to a membrane electrode assembly (MEA). A schematic cross-sectional diagram of a membrane electrode assembly 200 is shown in FIG. 3.

The MEA 200 includes a first electrode 21, a second electrode 22, and an electrolyte membrane 23 provided between the first electrode 21 and the second electrode 22. The MEA 200 can be used for water electrolysis. The first electrode 21 includes a support 21A and a catalyst layer 21B. The second electrode 22 includes a support 22A and a catalyst layer 22B.

The electrode 100 of the first embodiment is preferably used for the first electrode 21 or the second electrode 22. The electrode 100 is preferably used as an anode of the MEA 200. As a cathode electrode of the MEA 200, an electrode including the catalyst layer 22B including Pt as a catalyst provided on the support 22A is preferable.

The first electrode 21 is adjacent to one side of the electrolyte membrane 23 and includes the catalyst layer 21B adjacent to the electrolyte membrane 23 and the support 21A adjacent to the catalyst layer 21B.

The second electrode 22 is adjacent to the other side of the electrolyte membrane 23 and includes the catalyst layer 22B adjacent to the electrolyte membrane 23 and the support 22A adjacent to the catalyst layer 22B.

The electrolyte membrane 23 is a membrane which is electrically insulated and has a high proton conductivity or the like. As the electrolyte membrane 23 having a proton conductivity, for example, fluorinated polymers having a sulfonic acid group (for example NAFION (trademark, DuPont), FLEMION (trademark, Asahi Glass Co., Ltd.), SELEMION (trademark, Asahi Glass Co., Ltd.), Aquivion (trademark, Solvay Specialty Polymers) or Aciplex (trademark, Asahi Kasei Corp.) or the like) and inorganic compound, for example, tungstic acid and phospho-tungstic acid can be used. The electrolyte membrane 23 preferably includes Pt.

In view of the characteristics of the MEA 200, a thickness of the electrolyte membrane 23 is selected appropriately. In view of the strength, anti-solubility, and output characteristics of MEA 200, the thickness of the electrolyte membrane 23 is preferably 10 [um] or more and 200 [µm] or less. The thickness described in embodiments can represent an average thickness in a stacking direction. The stacking direction in the embodiments represents, for example, a direction from the second electrode 22 to the first electrode 21.

### (THIRD EMBODIMENT)

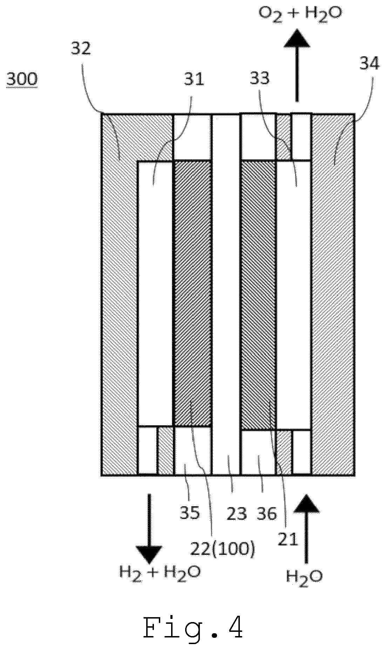

A third embodiment relates to electrochemical cell. A cross-sectional diagram of the electrochemical cell 300 according to the third embodiment is illustrated in FIG. 4.

The electrochemical cell 300 according to the third embodiment as illustrated in FIG. 4 includes a second electrode (cathode) 22, a first electrode (anode) 21, an electrolyte membrane 23, a cathode feeder 31, a separator 32, an anode feeder 33, a separator 34, a gasket (seal) 35, and a gasket (seal) 36.

For example, the electrode 100 of embodiments is used for the anode 21. The anode feeder 33 and the cathode feeder 31 is not limited as long as it passes gas and water. The anode feeder 31 and the cathode feeder 31 may be integrated with the separator 32 and the separator 34, respectively. Specifically, the separator 32 and the separator 34 are not limited to a separator having a flow passage for water or the like and gas or a separator having porousness. By virtue of using the electrode 100 according to the embodiment, the electrochemical cell 300 has excellent durability.

In the electrochemical cell 300 of FIG. 4, un-illustrated electrodes are connected to the anode feeder 33 and the cathode feeder 31 and reactions occur at the cathode 22 and the anode 21. Water or the like is supplied to the anode 21 and water is decomposed to proton, oxygen, and electron at the anode 21. The support for the electrode and the feeder are porous member, and the porous member functions as a passage board.

The formed water and un-reacted water are extracted, and proton and electron are used for a cathode reaction. The cathode reaction is that proton and electron react, and hydrogen is formed. The formed hydrogen and/or formed oxygen can be used as a fuel-cell fuel or the other apparatus. The separator 32 and the separator 34 hold the membrane electrode assembly 200. The airtightness of the electrochemical cell 300 is secured by the gasket 35 and the gasket 36.

### (FOURTH EMBODIMENT)

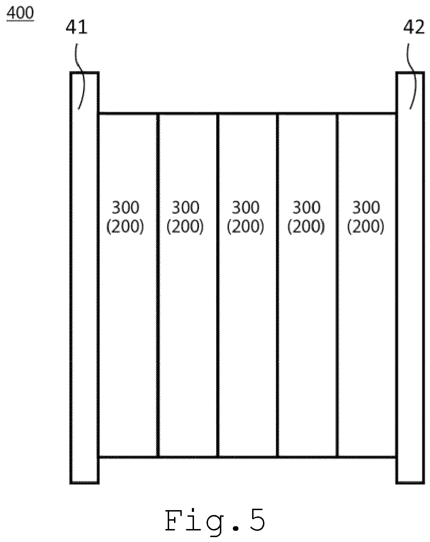

The fourth embodiment relates to a stack. FIG. 5 illustrate a schematic cross-sectional diagram of stack. The stack 400 according to the fourth embodiment illustrated in FIG. 5 is configured so that two or more of the MEAs 200 or the electrochemical cells 300 are connected in series. Tightening plates 41 and 42 are attached to both ends of the electrochemical cells 300.

The voltage of a single MEA 200 or the electrochemical cell 300 is low. Therefore, high voltage can be obtained by structuring the stack 400 in which two or more of the MEAs 200 or the electrochemical cells 300 are connected in series. The amount of hydrogen generated in the electrochemical cell 300 composed of a single MEA 200 is small. Therefore, a large amount of hydrogen can be obtained by structuring the stack 400 in which two or more of the electrochemical cells are connected in series.

### (FIFTH EMBODIMENT)

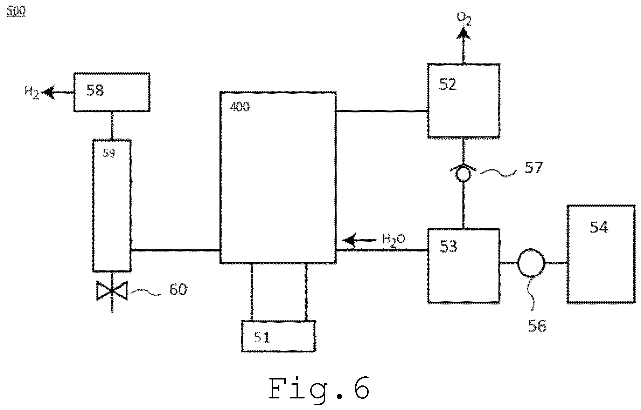

A fifth embodiment relates to an electrolyzer. FIG. 6 illustrates a conceptual diagram of the electrolyzer according to the fifth embodiment. The electrolyzer 500 uses the electrochemical cell 300 or the stack 400. As shown in FIG. 6, water electrolysis cells stacked in series are used as the stack 400 for water electrolysis. A power supply 51 is attached to the stack 400, and voltage is applied between the anode and the cathode.

A gas-liquid separator 52 for separating generated gas and unreacted water and a mixing tank 53 are connected to the anode side of the stack 400 for water electrolysis and water is sent to the mixing tank 53 by a pump 56 from an ion exchanged water producing apparatus 54 that supplies water for mixing in the mixing tank 53, and water is circulated to the anode mixed in the mixing tank 53 through a check valve 57 from the gas-liquid separator 52. Oxygen generated in the anode passes through the gas-liquid separator 52 so that an oxygen gas is obtained. On the other hand, a hydrogen purification device 59 is connected to the cathode side subsequent to a gas-liquid separator 58 to obtain high purity hydrogen. Impurities are discharged via a path having a valve 60 connected to the hydrogen purification device 59. In order to control the operating temperature stably, it is possible to control the heating of the stack and a mixing tank, the current density during thermal decomposition, and the like.

Hereinafter, examples of embodiments will be described.

### (Example A)

A 0.02 [cm] thick of a titanium un-woven fabric substrate with a size of 5 [cm] × 5 [cm] is used as the substrate 1. First, Ni oxide as the oxide layer 2A is formed on the support 1. A 0.5 [nm] thick of the Ni oxide film is formed on the support 1 by RF-sputtering in an argon atmosphere containing oxygen using Ni target. The first catalyst layer 2B is formed on the Ni oxide film by DC-sputtering in an argon atmosphere containing 10% of oxygen using Ir target, followed by forming the Ni oxide film. The forming conditions of the oxide layer 2A and the first catalyst layer 2B of Example A-1 to Example A-4 and Comparative Example A-1 to Comparative Example A-5 are shown in Table 1 and Table 2.

**[Table 1]**

| | OXIDE LAYER | | | | | | |
|---|---|---|---|---|---|---|---|
| | Thickness [nm] | Ir | | Ru | | Ni | |
| | | DC Power [W] | Time [sec] | DC Power [W] | Time [sec] | RF Power [W] | Time [sec] |
| Example A-1 | 0.5 | 0 | 0 | 0 | 0 | 500 | 10 |
| Example A-2 | 0.5 | 0 | 0 | 0 | 0 | 500 | 10 |
| Example A-3 | 0.5 | 0 | 0 | 0 | 0 | 500 | 10 |
| Example A-4 | 0.5 | 0 | 0 | 0 | 0 | 500 | 10 |
| | | | | | | | |
| Comparative Example A-1 | 0.5 | 0 | 0 | 0 | 0 | 500 | 10 |
| Comparative Example A-2 | 0.5 | 0 | 0 | 0 | 0 | 500 | 10 |
| Comparative Example A-3 | 0.5 | 0 | 0 | 0 | 0 | 500 | 10 |
| Comparative Example A-4 | 0.5 | 0 | 0 | 0 | 0 | 500 | 10 |
| Comparative Example A-5 | 0.5 | 0 | 0 | 0 | 0 | 500 | 10 |

Next, the second catalyst layer 2C is formed on the first catalyst layer 2B. While forming the second catalyst layer 2C is processed, a layer of Ni oxide which is non-noble metal and a noble oxide layer (layers of Ir oxide or layers of oxide of Ir and Ru) are formed alternately. First, the layer of Ni oxide (precursor of the gap layer) is formed on the first catalyst layer 2B, and the noble oxide layer (precursor of the sheet layer) are formed on the oxide layer of Ni alternately. The forming conditions of the gap layer of Example A-1 to Example A-4 and Comparative Example A-1 to Comparative Example A-5 are shown in Table 3. The forming conditions of the sheet layer of Example A-1 to Example A-4 and Comparative Example A-1 to Comparative Example A-5 are shown in Table 3. The catalyst layers are formed by sputtering non-noble metal and noble metal in an atmosphere containing oxygen. The sputtering of non-noble metal and the sputtering of noble metal are processed simultaneously.

**[Table 2]**

| | FIRST CATALYST LAYER | | | | | | |
|---|---|---|---|---|---|---|---|
| | Thickness [nm] | Ir | | Ru | | Ni | |
| | | DC Power [W] | Time [sec] | DC Power [W] | Time [sec] | RF Power [W] | Time [sec] |
| Example A-1 | 1 | 100 | 180 | 0 | 0 | 0 | 0 |
| Example A-2 | 5 | 100 | 180 | 0 | 0 | 0 | 0 |
| Example A-3 | 10 | 100 | 180 | 0 | 0 | 0 | 0 |
| Example A-4 | 10 | 100 | 100 | 100 | 100 | 0 | 0 |
| | | | | | | | |
| Comparative Example A-1 | 0 | 0 | 0 | 0 | 0 | 0 | 0 |
| Comparative Example A-2 | 20 | 100 | 360 | 0 | 0 | 0 | 0 |
| Comparative Example A-3 | 30 | 100 | 540 | 0 | 0 | 0 | 0 |
| Comparative Example A-4 | 50 | 100 | 900 | 0 | 0 | 0 | 0 |
| Comparative Example A-5 | 50 | 100 | 450 | 450 | 100 | 0 | 0 |

**[Table 3]**

| | GAP LAYER | | | | | | |
|---|---|---|---|---|---|---|---|
| | Thickness [nm] | Ir | | Ru | | Ni | |
| | | DC Power [W] | Time [sec] | DC Power [W] | Time [sec] | RF Power [W] | Time [sec] |
| Example A-1 | 10 | 0 | 0 | 0 | 0 | 500 | 200 |
| Example A-2 | 10 | 0 | 0 | 0 | 0 | 500 | 200 |
| Example A-3 | 10 | 0 | 0 | 0 | 0 | 500 | 200 |
| Example A-4 | 10 | 0 | 0 | 0 | 0 | 500 | 200 |
| | | | | | | | |
| Comparative Example A-1 | 10 | 0 | 0 | 0 | 0 | 500 | 200 |
| Comparative Example A-2 | 10 | 0 | 0 | 0 | 0 | 500 | 200 |
| Comparative Example A-3 | 10 | 0 | 0 | 0 | 0 | 500 | 200 |
| Comparative Example A-4 | 10 | 0 | 0 | 0 | 0 | 500 | 200 |
| Comparative Example A-5 | 10 | 0 | 0 | 0 | 0 | 500 | 200 |

**[Table 4]**

| | SHEET LAYER | | | | | | |
|---|---|---|---|---|---|---|---|
| | Thickness [nm] | Ir | | Ru | | Ni | |
| | | DC Power [W] | Time [sec] | DC Power [W] | Time [sec] | RF Power [W] | Time [sec] |
| Example A-1 | 19 | 100 | 180 | 0 | 0 | 500 | 180 |
| Example A-2 | 19 | 100 | 180 | 0 | 0 | 500 | 180 |
| Example A-3 | 19 | 100 | 180 | 0 | 0 | 500 | 180 |
| Example A-4 | 19 | 100 | 100 | 100 | 100 | 500 | 180 |
| | | | | | | | |
| Comparative Example A-1 | 19 | 100 | 180 | 0 | 0 | 500 | 180 |
| Comparative Example A-2 | 19 | 100 | 180 | 0 | 0 | 500 | 180 |
| Comparative Example A-3 | 19 | 100 | 180 | 0 | 0 | 500 | 180 |
| Comparative Example A-4 | 19 | 100 | 180 | 0 | 0 | 500 | 180 |
| Comparative Example A-5 | 19 | 100 | 100 | 100 | 100 | 500 | 180 |

After the sputtering, the Ni oxide is partly eluted due to washing the sputtered member with 1 M nitric acid and pure water, and an anode electrode which has the laminated catalyst 2 provided on the support 1, whose the second catalyst layer 2C has a structure formed by stacking the dense layer and the high-porous layer alternately, is obtained .

FIG. 5 shows the ratio R1 of the thickness of the dense layer to the thickness of the first catalyst layer 2B ([the average thickness of the dense layers] / [the average thickness of the first catalyst layer 2B]), the ratio R2 of the thickness of the high-porous layer to the thickness of the first catalyst layer 2B ([the average thickness of the high-porous layers] / [the average thickness of the first catalyst layer 2B]), and A ratio R3 of the thickness of the high-porous layer to the thickness of the dense layer ([the average thickness of the high-porous layers] / [the average thickness of the dense layers]).

**[Table 5]**

| | R 1 | R 2 | R 3 |
|---|---|---|---|
| Example A-1 | 19 | 4 | 4.75 |
| Example A-2 | 3.80 | 0.80 | 4.75 |
| Example A-3 | 1.90 | 0.40 | 4.75 |
| Example A-4 | 1.90 | 0.40 | 4.75 |
| | | | |
| Comparative Example A-1 | - | - | 4.75 |
| Comparative Example A-2 | 0.95 | 0.20 | 4.75 |
| Comparative Example A-3 | 0.63 | 0.13 | 4.75 |
| Comparative Example A-4 | 0.38 | 0.08 | 4.75 |
| Comparative Example A-5 | 0.38 | 0.08 | 4.75 |

A 25 [um] thick of a carbon paper (Toray060 manufactured by Toray Industries, Inc.) having a carbon layer is prepared for a support of a cathode. A catalyst layer having a laminated structure including porous layers formed by sputtering so that the loading density of Pt becomes 0.2 [mg / cm²], is formed on the support, and an electrode having porous catalyst layer is obtained. This electrode is used as the standard cathode of Examples and Comparative Examples.

### <Manufacturing MEA 200>

Pieces of the anode and the cathode of 5 [cm] squares are cut.

The standard cathode, an electrolyte membrane (Nafion115 manufactured by DuPont), and the anode are sticked together and bonded by thermocompression bonding, and MEA 200 for each PEEC is obtained.

### <Manufacturing Single Cell>

The obtained MEA 200 is set between two separators having flow passage to produce a PEEC single cell (electrochemical cell).

Next, the anodes of Example A and Comparative Example A is evaluated. The obtained single cell is conditioned for one day. Thereafter, the single cell is maintained at 80 [°C] and 0.05 [L/min] of ultrapure-water is supplied to the anode. The cell voltage (VC) is measured after operating 48 hours with applying current between the anode and the cathode using a power supply at a current density of 2 [A / cm²]. Table 6 shows the cell voltage (VC).

The durability is evaluated under the following durability protocol. The single cell is maintained at 80 [°C] while 0.05 [L/min] of ultrapure-water is supplied to the anode. In this state, the cell voltage is maintained at 1.2 [V] for 3 seconds and the cell voltage is maintained at 2.0 [V] for 3 seconds as one cycle. The one cycle is performed by total 30000 cycles. Thereafter, the temperature is maintained at 80 [°C] and 0.05 [L/min] of ultrapure-water is supplied to the anode. Cell voltage (V1) is measured after operating 24 hours with applying current between the anode and the cathode using a power supply at a current density of 2 [A/cm²]. A rate of voltage increase (100 × (V1/(VC) - 100) is calculated by comparing with the cell voltage of before evaluation of the durability. Table 6 shows the rate of voltage increase.

**[Table 6]**

| | CELL VOLTAGE [V] | RATE OF VOLTAGE INCREASE [%] |
|---|---|---|
| Example A-1 | 1.80 | 1.11 |
| Example A-2 | 1.80 | 1.11 |
| Example A-3 | 1.80 | 1.67 |
| Example A-4 | 1.75 | 2.86 |
| | | |
| Comparative Example A-1 | 1.90 | 15.79 |
| Comparative Example A-2 | 1.80 | 3.89 |
| Comparative Example A-3 | 1.81 | 4.97 |
| Comparative Example A-4 | 1.82 | 4.40 |
| Comparative Example A-5 | 1.76 | 7.95 |

The nickel oxide layer 2A is eluted by washing with nitric oxide because the first catalyst layer 2B does not present in the Comparative Example A-1. Therefore, the initial performance and the durability of the Comparative Example A-1 is poor due to the poor contact between the titanium support and the catalyst layer. When the first catalyst layer is thick, the cell has sufficient initial performance but low durability. This may be caused by gradual cleavage of the first catalyst layer 2B from the support during operating because the first catalyst layer 2B and the oxide layer 2A are dense and thick. This result implies that preferable thickness of the first catalyst layer 2B may be present.

### (Example B)

Anode of Example B-1 (Examples B and Comparative Examples B) is manufactured as same as the procedures of Example A-2 except the thickness of the oxide layer 2A. Table 7 shows conditions for forming the oxide layer 2A of Example B-1 to Example B-3 and Comparative Example B-1 to Comparative Example B-3.

**[Table 7]**

| | OXYDE LAYER | |
|---|---|---|
| | ELEMENT | THICKNESS [nm] |
| EXAMPLE B-1 | Ni | 0.1 |
| EXAMPLE B-2 | Ni | 0.2 |
| EXAMPLE B-3 | Ni | 0.3 |
| | | |
| COMPARATIVE EXAMPLE B-1 | Ni | 2 |
| COMPARATIVE EXAMPLE B-2 | Ni | 5 |
| COMPARATIVE EXAMPLE B-3 | Ni | 10 |

Each of the anodes of Examples B and Comparative Examples is installed to an electrochemical cell in the like manner of Example A. Each of the anodes of the Examples B and Comparative Examples B is evaluated in the same manner of the Example A. When the thickness of the oxide layer 2A of the Comparative Examples B is thick, the results show that the durability is degraded. The cleavage between the first catalyst layer 2B and the second catalyst layer 2C may be occurred due to the elution of the oxide layer 2A having an excessive thickness in the acceleration test. This result implies that preferable thickness of the oxide layer 2A may be present. The evaluation results are shown in FIG. 8.

**[Table 8]**

| | CELL VOLTAGE [V] | RATE OF VOLTAGE INCREASE [%] |
|---|---|---|
| EXAMPLE B-1 | 1.8 | 1.11 |
| EXAMPLE B-2 | 1.8 | 1.11 |
| EXAMPLE B-3 | 1.8 | 1.67 |
| | | |
| COMPARATIVE EXAMPLE B-1 | 1.8 | 3.89 |
| COMPARATIVE EXAMPLE B-2 | 1.8 | 6.67 |
| COMPARATIVE EXAMPLE B-3 | 1.8 | 11.11 |

### (Example C)

Anodes of Example C and Comparative example are manufactured as same as the procedures of Example A and Comparative Example C except that the support 1 is heated at 400 [°C] in sputtering. Table 9 to Table 12 show forming conditions of Example C-1 to Example C-3 and Comparative Example C-1 to Comparative Example C-5.

**[Table 9]**

| | OXIDE LAYER | | | | | | |
|---|---|---|---|---|---|---|---|
| | Thickness [nm] | Ir | | Ru | | Ni | |
| | | DC Power [W] | Time [sec] | DC Power [W] | Time [sec] | RF Power [W] | Time [sec] |
| Example C-1 | 0.5 | 0 | 0 | 0 | 0 | 500 | 10 |
| Example C-2 | 0.5 | 0 | 0 | 0 | 0 | 500 | 10 |
| Example C-3 | 0.5 | 0 | 0 | 0 | 0 | 500 | 10 |
| Example C-4 | 0.5 | 0 | 0 | 0 | 0 | 500 | 10 |
| | | | | | | | |
| Comparative Example C-1 | 0.5 | 0 | 0 | 0 | 0 | 500 | 10 |
| Comparative Example C-2 | 0.5 | 0 | 0 | 0 | 0 | 500 | 10 |
| Comparative Example C-3 | 0.5 | 0 | 0 | 0 | 0 | 500 | 10 |
| Comparative Example C-4 | 0.5 | 0 | 0 | 0 | 0 | 500 | 10 |
| Comparative Example C-5 | 0.5 | 0 | 0 | 0 | 0 | 500 | 10 |

**[Table 10]**

| | FIRST CATALYST LAYER | | | | | | |
|---|---|---|---|---|---|---|---|
| | Thickness [nm] | Ir | | Ru | | Ni | |
| | | DC Power [W] | Time [sec] | DC Power [W] | Time [sec] | RF Power [W] | Time [sec] |
| Example C-1 | 1 | 100 | 180 | 0 | 0 | 0 | 0 |
| Example C-2 | 5 | 100 | 180 | 0 | 0 | 0 | 0 |
| Example C-3 | 10 | 100 | 180 | 0 | 0 | 0 | 0 |
| Example C-4 | 10 | 100 | 100 | 100 | 100 | 0 | 0 |
| | | | | | | | |
| Comparative Example C-1 | 0 | 0 | 0 | 0 | 0 | 0 | 0 |
| Comparative Example C-2 | 20 | 100 | 360 | 0 | 0 | 0 | 0 |
| Comparative Example C-3 | 30 | 100 | 540 | 0 | 0 | 0 | 0 |
| Comparative Example C-4 | 50 | 100 | 900 | 0 | 0 | 0 | 0 |
| Comparative Example C-5 | 50 | 100 | 450 | 450 | 100 | 0 | 0 |

**[Table 11]**

| | GAP LAYER | | | | | | |
|---|---|---|---|---|---|---|---|
| | Thickness [nm] | Ir | | Ru | | Ni | |
| | | DC Power [W] | Time [sec] | DC Power [W] | Time [sec] | RF Power [W] | Time [sec] |
| Example C-1 | 10 | 0 | 0 | 0 | 0 | 500 | 200 |
| Example C-2 | 10 | 0 | 0 | 0 | 0 | 500 | 200 |
| Example C-3 | 10 | 0 | 0 | 0 | 0 | 500 | 200 |
| Example C-4 | 10 | 0 | 0 | 0 | 0 | 500 | 200 |
| | | | | | | | |
| Comparative Example C-1 | 10 | 0 | 0 | 0 | 0 | 500 | 200 |
| Comparative Example C-2 | 10 | 0 | 0 | 0 | 0 | 500 | 200 |
| Comparative Example C-3 | 10 | 0 | 0 | 0 | 0 | 500 | 200 |
| Comparative Example C-4 | 10 | 0 | 0 | 0 | 0 | 500 | 200 |
| Comparative Example C-5 | 10 | 0 | 0 | 0 | 0 | 500 | 200 |

**[Table 12]**

| | SHEET LAYER | | | | | | |
|---|---|---|---|---|---|---|---|
| | Thickness [nm] | Ir | | Ru | | Ni | |
| | | DC Power [W] | Time [sec] | DC Power [W] | Time [sec] | RF Power [W] | Time [sec] |
| Example C-1 | 19 | 100 | 180 | 0 | 0 | 500 | 180 |
| Example C-2 | 19 | 100 | 180 | 0 | 0 | 500 | 180 |
| Example C-3 | 19 | 100 | 180 | 0 | 0 | 500 | 180 |
| Example C-4 | 19 | 100 | 100 | 100 | 100 | 500 | 180 |
| | | | | | | | |
| Comparative Example C-1 | 19 | 100 | 180 | 0 | 0 | 500 | 180 |
| Comparative Example C-2 | 19 | 100 | 180 | 0 | 0 | 500 | 180 |
| Comparative Example C-3 | 19 | 100 | 180 | 0 | 0 | 500 | 180 |
| Comparative Example C-4 | 19 | 100 | 180 | 0 | 0 | 500 | 180 |
| Comparative Example C-5 | 19 | 100 | 100 | 100 | 100 | 500 | 180 |

FIG. 13 shows the ratio R1 of the thickness of the dense layer to the thickness of the first catalyst layer 2B ([the average thickness of the dense layers] / [the average thickness of the first catalyst layer 2B]), the ratio R2 of the thickness of the high-porous layer to the thickness of the first catalyst layer 2B ([the average thickness of the high-porous layers] / [the average thickness of the first catalyst layer 2B]), and A ratio R3 of the thickness of the high-porous layer to the thickness of the dense layer ([the average thickness of the high-porous layers] / [the average thickness of the dense layer]).

**[Table 13]**

| | R 1 | R 2 | R 3 |
|---|---|---|---|
| Example C-1 | 19 | 4 | 4.75 |
| Example C-2 | 3.80 | 0.80 | 4.75 |
| Example C-3 | 1.90 | 0.40 | 4.75 |
| Example C-4 | 1.90 | 0.40 | 4.75 |
| | | | |
| Comparative Example C-1 | - | - | 4.75 |
| Comparative Example C-2 | 0.95 | 0.20 | 4.75 |
| Comparative Example C-3 | 0.63 | 0.13 | 4.75 |
| Comparative Example C-4 | 0.38 | 0.08 | 4.75 |
| Comparative Example C-5 | 0.38 | 0.08 | 4.75 |

MEAs and electrochemical cells of Examples C and Comparative Examples C are manufactured in the like manner of Example A, and cell voltages and rates of voltage increase are evaluated. The results are shown in FIG. 14. By virtue of heating the support, the initial performance is not very different, and the durability is increased.

**[Table 14]**

| | CELL VOLTAGE [V] | RATE OF VOLTAGE INCREASE [%] |
|---|---|---|
| Example C-1 | 1.8 | 0.56 |
| Example C-2 | 1.81 | 0.28 |
| Example C-3 | 1.80 | 0.56 |
| Example C-4 | 1.75 | 1.71 |
| | | |
| Comparative Example C-1 | 1.88 | 17.02 |
| Comparative Example C-2 | 1.80 | 3.89 |
| Comparative Example C-3 | 1.81 | 4.42 |
| Comparative Example C-4 | 1.82 | 3.30 |
| Comparative Example C-5 | 1.76 | 6.25 |

Some elements are expressed only by element symbols thereof.

Hereinafter, clauses of embodiments are additionally noted.
Clause 1 A laminated catalyst comprising:
   an oxide layer;
   a first catalyst layer on the oxide layer; and
   a second catalyst layer on the first catalyst layer, wherein
   the oxide layer is a layer of oxide including one or more non-noble metals as a main component,
   the first catalyst layer includes an oxide of noble metal including Ir and/or Ru as a main component,
   the second catalyst layer includes an oxide of noble metal including Ir and/or Ru as a main component, and
   the first catalyst layer is denser than the second catalyst layer.
Clause 2 The laminated catalyst according to clause 1, wherein the oxide layer includes an oxide including one or more transition elements.
Clause 3 The laminated catalyst according to clause 1 or 2, wherein a porosity rate of the oxide layer is 0 [%] or more and 5 [%] or less.
Clause 4 The laminated catalyst according to any one of clauses 1 to 3, wherein
   the oxide layer includes an oxide of Ni, and
   a ratio of Ni contained in the oxide layer to one or more metal elements contained in the oxide layer is 80 [atom%] or more and 100 [atom%] or less.
Clause 5 The laminated catalyst according to any one of clauses 1 to 4, wherein a thickness of the oxide layer is 0.1 [nm] or more and 1.5 [nm] or less.
Clause 6 The laminated catalyst according to clause 1 to 5, wherein a porosity rate of the first catalyst layer is 0 [%] or more and 5 [%] or less.
Clause 7 The laminated catalyst according to any one of clauses 1 to 6, wherein a thickness of the first catalyst layer is 0.5 [nm] or more and 15 [nm] or less.
Clause 8 The laminated catalyst according to any one of clauses 1 to 7, wherein a sum of concentration of Ir and Ru contained in the first catalyst layer to one or more metal elements contained in the first catalyst layer is 90 [%] or more and 100 [%] or less.
Clause 9 The laminated catalyst according to any one of clauses 1 to 8, wherein a porosity rate of the second catalyst layer is 10 [%] or more and 90 [%] or less.
Clause 10 The laminated catalyst according to any one of clauses 1 to 9, wherein a thickness of the second catalyst layer is 100 [nm] or more and 2000 [nm] or less.
Clause 11 The laminated catalyst according to any one of clauses 1 to 10, wherein a sum of concentration of Ir and Ru contained in the second catalyst layer to one or more metal elements contained in the second catalyst layer is 90 [%] or more and 100 [%] or less.
Clause 12 An electrode comprising:
   the laminated catalyst according to any one of clauses 1 to 11; and
   a substrate.
Clause 13 A membrane electrode assembly comprising:
   the electrode according to clause 12.
Clause 14 An electrochemical cell comprising:
   the membrane electrode assembly according to clause 13.
Clause 15 A stack comprising:
   the electrode chemical cell according to clause 14.
Clause 16 An electrolyzer comprising:
   the electrochemical cell according to clause 14 or the stack according to clause 15.

While certain embodiments have been described, these embodiments have been presented by way of example only, and are not intended to limit the scope of the inventions. Indeed, the novel embodiments described herein, for example, PEMEC as a water electrolysis cell may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A laminated catalyst comprising:
an oxide layer;
a first catalyst layer on the oxide layer; and
a second catalyst layer on the first catalyst layer, wherein
the oxide layer is a layer of oxide including one or more non-noble metals as a main component,
the first catalyst layer includes an oxide of noble metal including Ir and/or Ru as a main component,
the second catalyst layer includes an oxide of noble metal including Ir and/or Ru as a main component, and
the first catalyst layer is denser than the second catalyst layer.

2. The laminated catalyst according to claim 1, wherein the oxide layer includes an oxide including one or more transition elements.

3. The laminated catalyst according to claim 1 or 2, wherein a porosity rate of the oxide layer is 0 [%] or more and 5 [%] or less.

4. The laminated catalyst according to any one of claims 1 to 3, wherein
the oxide layer includes an oxide of Ni, and
a ratio of Ni contained in the oxide layer to one or more metal elements contained in the oxide layer is 80 [%] or more and 100 [%] or less.

5. The laminated catalyst according to any one of claims 1 to 4, wherein a thickness of the oxide layer is 0.1 [nm] or more and 1.5 [nm] or less.

6. The laminated catalyst according to any one of claims 1 to 5, wherein a porosity rate of the first catalyst layer is 0 [%] or more and 5 [%] or less.

7. The laminated catalyst according to any one of claims 1 to 6, wherein a thickness of the first catalyst layer is 0.5 [nm] or more and 15 [nm] or less.

8. The laminated catalyst according to any one of claims 1 to 7, wherein a sum of concentration of Ir and Ru contained in the first catalyst layer to one or more metal elements contained in the first catalyst layer is 90 [%] or more and 100 [%] or less.

9. The laminated catalyst according to any one of claims 1 to 8, wherein a porosity rate of the second catalyst layer is 10 [%] or more and 90 [%] or less.

10. The laminated catalyst according to any one of claims 1 to 9, wherein a thickness of the second catalyst layer is 100 [nm] or more and 2000 [nm] or less.

11. The laminated catalyst according to any one of claims 1 to 10, wherein a sum of concentration of Ir and Ru contained in the second catalyst layer to one or more metal elements contained in the second catalyst layer is 90 [%] or more and 100 [%] or less.

12. An electrode comprising:
the laminated catalyst according to any one of claims 1 to 11; and
a substrate.

13. A membrane electrode assembly comprising:
the electrode according to claim 12.

14. An electrochemical cell comprising:
the membrane electrode assembly according to claim 13.

15. An electrolyzer comprising:
the electrochemical cell according to claim 14 or the stack comprising the membrane electrode assembly according to claim 13.
